# EUROPEAN PATENT APPLICATION

(11) **EP 1 477 877 A1**
(43) Date of publication of application: **17.11.2004**
(21) Application number: 03010609.0
(22) Date of filing: 12.05.2003
(51) Int. Cl.: G06F 1/00, G06F 9/445

(54) **Method of implementing a java card firewall into a smart card controller**

(71) Applicant: Infineon Technologies AG, 81669 München (DE)
(72) Inventor: Valverde, Antonio, 81737 München (DE)
(74) Representative: Epping Hermann & Fischer

(57) **Abstract**

The invention relates to a Method of implementing a Java Card firewall into a smart card controller, where Java program code and Java program data are located in defined memory areas (2, 3 and 4) and a first Java program code is needed to be able to access the memory area of a second Java program code or data, and the Java program code is executed by the use of a Java Card Interpreter, by mapping the Java Card Interpreter (1) in the defined memory areas (2, 3 and 4) of the first Java program code and the second Java program code.

## Description

The invention relates to a method of implementing a Java Card firewall into a Smart Card controller.

Java Card is an application of the Java language to smart cards. It consists of a Java Card Virtual Machine, a Java Card Runtime Environment and a Java Card application programming interface.

Smart cards, including a smart card controller, are often used for security systems, for example, access control systems for computer systems. It is especially in these or in similar contexts, that Java applications are to be executed on a smart card controller. Different Java applications or Java applets are located in different memory areas, the so-called packages. An implementation of the Java Card Runtime Environment should support isolation of these packages. In this context isolation means that one application is not able to access an application located in another package, unless the other application provides an interface for access.

The above Java Card firewall protection is defined in the "Java Card 2.1 Runtime Environment Specification" from Sun Microsystems. The Java Card firewall provides protection against the most frequently anticipated security concerns, for example, developers' mistakes and design oversights that could allow sensitive data to be "leaked" to another applet or application. An applet may be able to obtain an object reference from a publicly accessible location but if the object is owned by an applet in another context the firewall ensures security. For that the "Java Card 2.1 Java Card Runtime Environment specification" specifies the basic minimum protection requirements of context and firewalls. To enable applets to interact with each other and with the Java Card Runtime Environment, some well-defined yet secure mechanisms are provided so that one context or an application can access an object or an application belonging to another package.

Between the different packages, access control rules are defined in each package and controlled by a program counter. In some smart card controllers, the memory areas in which the applications are located, or the packages are located, belong to predefined or dynamical memory area. The interpreter, which is used to execute the byte code containing these applications must be located in a privileged layer, for example the so-called operating system layer. This is becaus the interpreter has to have access to all the applications in order to fetch and execute the codes. So access control between those application can't be enforced by the programm counter.

It is an object of the present invention to realize interpackage access control for smart card controllers in a more secure way.

This object is achieved by a method according to claim 1. Advantageous further developments are as set out in the respective dependent claims.

It is the advantage of the present invention that, by mapping a Java Card interpreter into all the located or defined memory areas that the packages are located in, interpackage data access rules are applicable, and other applications located in other packages can only be accessed when an interpackage access permission is granted for reading or writing.

The invention will be described in detail herein below on the basis of an embodiment shown in the drawings.

Figure 1 is a schematic drawing of a prefered method of the present invention.

Figure 2 is showing a table, defining access rights for different Java Card elements.

Figure 3 is a schematic drawing of the allocation of the different Java Card elements.

According to the object of the present invention, a special type of smart card controller will be described in the following to reach a better understanding of the detailed description of the preferred method.

In the following, a prefered embodiment related to a security controller "SC" is described. The security concept of the "SC" is based on designated packages. These packages are used as the basic building blocks for programming. A package is an encapsulated library of code together with its permanent data. A package does not have arbitrary access to other packages. Instead, access to a package is restricted by its own package specific access rights. In fact, the term "encapsulated" in the package definition means that each package includes a declaration of rights granting secure access to the package by all other packages. The package that is called first is referred to as the root package.

All packages, including the operating system package, are treated on an equal footing with respect to access protection from other packages. A function call from one package to another package is protected by hardware and may be performed immediately. There is no need for the operating system to control function calls. Each package guards itself by means of attributes specifying how the package may be accessed by other packages at one time. The smart card operating systems for the "SC" has full access to the code and data of all packages, except the security layer.

The "SC" must provide a memory management unit that allows to map physical adresses to virtual adresses. In that case, the programm counter will allways contain virtal adresses.

The "SC" has an implementation of the following features to support the implementation of a Virtual Machine:
- a group of "SC" instructions, called Virtual Language Fetch Instructions, used to extract a byte from a byte code stream and branch to a location where an associated sequence of native instructions is located. Another group of instructions allows to fetch and process the parameters associated to a byte code in the byte code stream;
- a set of registers that contain a pointer, for example a Virtual Instruction Pointer (VIP), to a current position of the byte code stream, a bas pointer to the beginning of the Java card interpreter for example the Virtual Machine Executing Unit (VMXU), a value in the top of a stack, a stack pointer and a register to store fetch parameters;

The byte code is seen as data to be fetched to the "SC" registers and not as code to be directly executed. Therefore, byte codes are subject to the data access rules and not to the code access rules.

The natural package to place a Java Card Interpreter is in a privileged layer like the operating system. The undesirable consequence of this is the possibility of any access of any data in any package due to the fact that the operating system layer has full access to the data in any package.

According to the object of the present invention, a Java Card Interpreter is mapped by means of the memory management unit into all the allocated packages, so that interpackage data access rules apply, and other packages can only be accessed when interpackage access permission is granted for reading or writing. For example, if an application in package 1 is invoked from an application out of package 2 a base pointer has to be initialized to the invoked package, so that the access rules of this package are applicable while the byte codes of the invoked application are processing.

All application invocation can be performed through specific instructions, so that a VIP-register (virtual instruction pointer) points to the byte codes of the invoke application when an invoke byte code is executed, and to the byte code of the invoking application that is executed when a return byte code is executed. In that case, the Java Card Runtime Environment has to save and restore the context during the execution of the method invocation and the return the byte codes.

The application invocation sequence could be written as follows:
- save the application context into a stack;
- create a new stack frame into the stack and put arguments as first local variables;
- set the VIP-registers to the address of the invoked method;
- set the base pointer to VMXU-register (virtual machine execution unit) to the starting address of the Java card interpreter mapped to the invoked package;
- fetch a new byte code with a specific instruction.
- execute the byte code

The return sequence would be:
- erase the contents of the stack frame;
- restore the application context;
- restore the stack pointer;
- restore the VIP at the end of the VMXU-register
- fetch a new byte code with a specific instruction.
- execute the byte code

In order to avoid that any application can be invoked from any package, the application invocation sequence should be able to check that the invoked method or application will fulfill one of the following requirements:
- it is a public or protected method inherited by the invoking application;
- it is a shareable interface implemented by the invoking application;
- it is a static method;
- it is a Java Card Runtime Environment entry point method;
- it is a global array method.

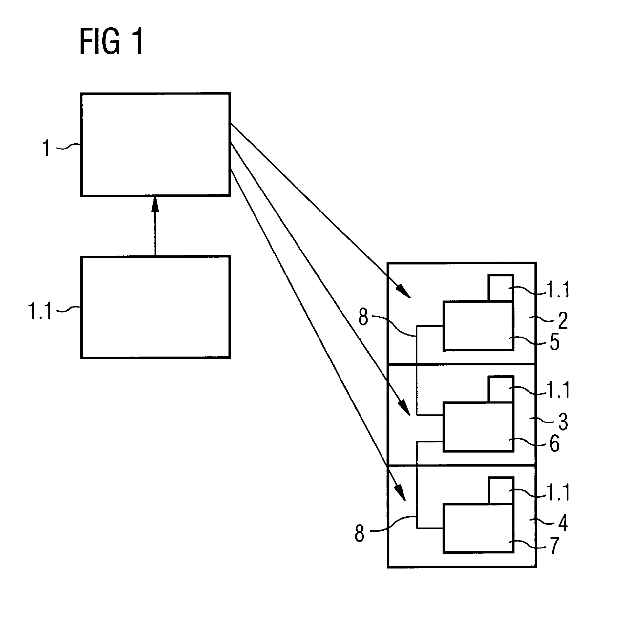

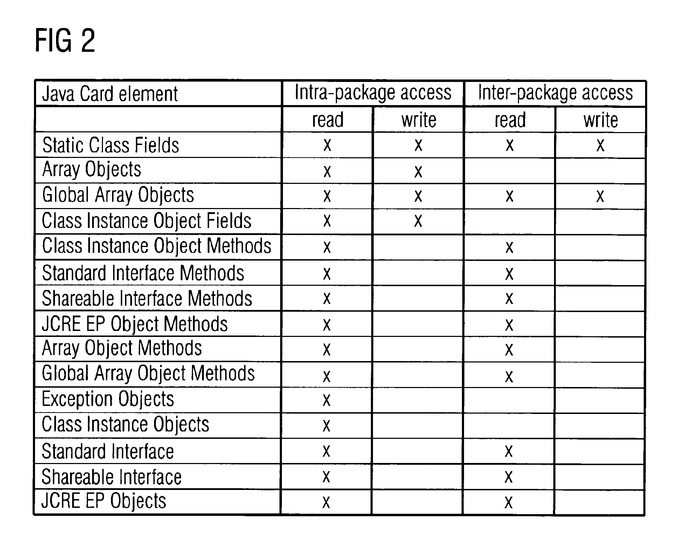

In Figure 2 a table is shown, concerning the defined access rights for different Java Card elements. The schematic drawing of Figure 1 shows the pointing of the virtual program counter 1 to the different memory areas 2, 3 and 4 where different applets 5, 6 and 7 with different applications are located. By using the pointing of the virtual programm counter 1 to the different memory areas 2, 3 and 4 the Java Card Interpreter 1.1 is mapped to the Java programm codes. By using the memory management unit of the smart card controller the address of the Java Card Interpreter 1 is mapped into all the active packages 2, 3 and 4.

Mapping in this context can be a copying of the Java Card Interpreter into the different memory areas 2, 3 and 4 respectivly to the different Java program codes, or it can be a pointing to the different memory areas 2, 3 and 4 respectivly to the different Java program codes, so that by executing the Java program code, the Java card interpreter is executed in the same memory area, for the controlling of the access rights 8, at any time.

With the Java Card Interpreter 1.1 beeing mapped into the active packages the access controll rules 8 can be controlled although the layer in with the memory areas 2, 3 and 4 are located in, provides full access to every package 5, 6 and 7.

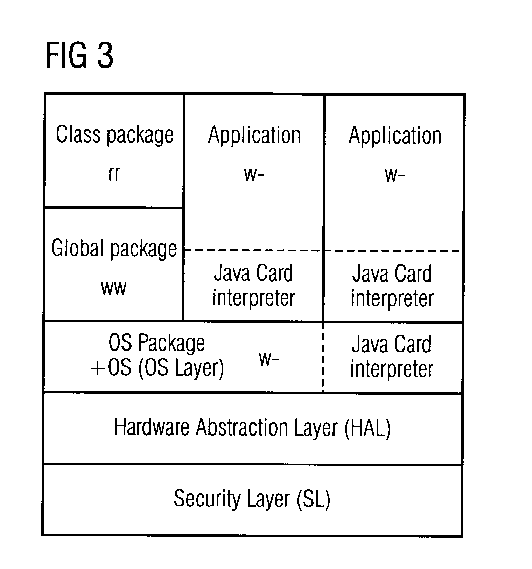

The naming and allocation of the different packages in the different layers is shown in Figure 3. Figure 3 also includes different access rights according to the access rules defined in Figure 2. In the following the access rights definition of Figure 3 will be briefly explained:
- rr: Interpackage access allowed for reading, no intrapackage access allowed;
- ww: Interpackage access allowed for reading and writing, no intrapackage access allowed;
- w-: Intrapackage access allowed for reading and writing, no interpackage access allowed.

Furthermore, the following is a short package description:
- the security layer is the SL package;
- the "HAL" package is the hardware abstraction layer which provides device drivers and also allows new drivers to be written;
- the OS package is where the instance of the Java Card Runtime Environment is located in. The OS-package is a privileged package. This package also contains the operating system of the smart card controller; the java card interpreter has to be mapped to this package;
- the class package contains the method area for alle classes in the card. Read access is allowed from any other package
- the global package contains static fields and global arrays. Read and write access is allowed from any other package in the global package;
- the application package contains the instances of applets, therefore each package corresponds to a different Java Card package installed in the card. For the application packages only interpackage access is allowed for reading and writing, the java card interpreter has to be mapped to any of the active application packages.

### List of reference numerals

- 1: Virtual Program Counter (VPC)
- 1.1: Java Card Interpreter
- 2, 3, 4: memory area
- 5, 6, 7: applet with Java program code
- 8: access rights

## Claims

1. Method of implementing a Java Card firewall into a smart card controller, where Java program code and Java program data are located in defined memory areas (2, 3 and 4) and a first Java program code is needed to be able to access the memory area of a second Java program code or data, and the Java program code is executed by the use of a Java Card Interpreter,
**characterized by**
mapping the Java Card Interpreter (1.1) in the defined memory areas (2, 3 and 4) of the first Java program code and the second Java program code.

2. Method according to claim 1,
**characterized in that**
the smart card controller is a so-called security controller.

3. Method according to claim 1 or claim 2,
**characterized in that**
the Java Card Interpreter (1.1) controls accessment rights (8) of the access of the first Java program code to the memory area of the second Java program code or data.
